# EUROPEAN PATENT APPLICATION

(11) **EP 4 611 073 A1**
(43) Date of publication of application: **03.09.2025**
(21) Application number: 22964093.3
(22) Date of filing: 04.11.2022
(51) Int. Cl.: H01M 4/62, C08F 259/08, H01M 10/0525

(54) **POLYMER HAVING CORE-SHELL STRUCTURE, CONDUCTIVE PASTE, SECONDARY BATTERY, AND ELECTRICAL DEVICE**

(71) Applicant: Contemporary Amperex Technology (Hong Kong) Limited, Hong Kong (HK)
(72) Inventor: FENG, Wei, Ningde, Fujian 352100 (CN); LIU, Huihui, Ningde, Fujian 352100 (CN); ZUO, Huanhuan, Ningde, Fujian 352100 (CN); ZHANG, Shuai, Ningde, Fujian 352100 (CN)
(74) Representative: Gong, Jinping
(86) International application number: PCT/CN2022/130073
(87) International publication number: WO 2024/092789

(57) **Abstract**

The present application provides a core-shell structured polymer, a conductive slurry, a secondary battery, and an electrical apparatus. The core-shell structured polymer comprises a core and a shell at least partially covering the core. The core contains a building block derived from a monomer represented by formula I and a building block derived from a monomer represented by formula II, and the shell contains the building block derived from the monomer represented by the formula I and a building block derived from a monomer represented by formula III, where R₁, R₂ and R₃ are each independently selected from one or more of hydrogen, fluorine, chlorine, and fluorine-substituted C₁₋₃ alkyl, and R₄, R₅, R₆, R₇, R₈ and R₉ are each independently selected from one or more of hydrogen, substituted or unsubstituted C_{1-S} alkyl.

## Description

### TECHNICAL FIELD

The present application relates to the technical field of secondary batteries, and in particular to a core-shell structured polymer and its preparation method, a conductive slurry and its preparation method, a secondary battery, a battery module, a battery pack and an electrical apparatus.

### BACKGROUND

In the production of secondary batteries, the conductivity of active materials is usually improved by adding conductive agents, thus improving the overall performance of the batteries. However, existing conductive agents usually have large specific surface area and are prone to agglomeration under action of Van der Waals forces, which affects the conductivity of the active materials, and tends to lead to uneven distribution of electrode plates, thus affecting performance of the active materials. Therefore, it is urgent to solve this technical problem.

### SUMMARY OF THE INVENTION

The present application is made in view of the foregoing subject matter, and it is intended to provide a core-shell structured polymer and a conductive slurry containing the core-shell structured polymer, for improving dispersity, processing performance and storage performance of the conductive slurry so as to improve battery performance.

A first aspect of the present application provides a core-shell structured polymer, comprising a core and a shell at least partially covering the core, the core containing a building block derived from a monomer represented by formula I and a building block derived from a monomer represented by formula II, and the shell containing the building block derived from the monomer represented by the formula I and a building block derived from a monomer represented by formula III, 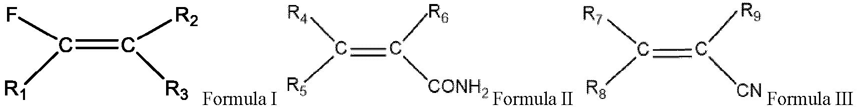 where R₁, R₂ and R₃ are each independently selected from one or more of hydrogen, fluorine, chlorine, and fluorine-substituted C₁₋₃ alkyl, and R₄, R₅, R₆, R₇, R₈ and R₉ are each independently selected from one or more of hydrogen, substituted or unsubstituted C₁₋₅ alkyl.

In any of embodiments, R₁ in the formula I is fluorine, and R₂ and R₃ are each independently selected from one or more of hydrogen, fluorine, chlorine and trifluoromethyl.

The core-shell structured polymer of the present application can optimize viscosity of the slurry to enable the slurry to have excellent anti-settling property, anti-gelling property and filterability, and can alleviate the settling and agglomeration of a conductive agent without the need of adding an additional dispersant, thereby improving electrode plate quality and battery performance.

In any of embodiments, the mass content of the core is 70% to 90% and the mass content of the shell is 10% to 30%, based on the total mass of the core-shell structured polymer.

By controlling the mass content of the core within a suitable range, the core-shell structured polymer can further optimize the viscosity of the slurry, thus comprehensively improving processing performance and use performance of the conductive slurry.

In any of embodiments, the molar content of the building block derived from the monomer represented by the formula I is 50% to 80% based on the total number of moles of all building blocks of the core-shell structured polymer.

By controlling the molar content of the building block derived from the monomer represented by the formula I within a suitable range, the viscosity of the conductive slurry can be further optimized, thus comprehensively improving the processing performance and adhesion performance of the conductive slurry.

In any of embodiments, the molar content of the building block derived from the monomer represented by the formula II is 10% to 20% and the molar content of the building block derived from the monomer represented by the formula III is 10% to 30%, based on the total number of moles of all building blocks of the core-shell structured polymer.

By controlling the molar content of the building block derived from the monomer represented by the formula II and the molar content of the building block derived from the monomer represented by the formula III within a suitable range, the viscosity of the conductive slurry can be further optimized, thus comprehensively improving processing performance and adhesion performance of the conductive slurry.

In any of embodiments, the mass content of the building block derived from the monomer represented by the formula I in the core is 85% to 95% based on the total mass of building blocks derived from the monomer represented by the formula I of the core-shell structured polymer.

A large number of fluorine-containing building blocks are located in the core of the core-shell structured polymer, which helps to slow down the gelling of the slurry and improve storage performance of the conductive slurry, thus further reducing production cost of the conductive slurry and increasing production efficiency of the conductive slurry.

In any of embodiments, the core-shell structured polymer has a weight-average molecular weight of 100,000 to 300,000.

By controlling the weight-average molecular weight of the core-shell structured polymer within a suitable range, both the adhesion force of the electrode plate and the filterability of the conductive slurry can be taken into account, thus comprehensively improving adhesion performance and processing performance of the electrode plate.

In any embodiment, the core-shell structured polymer has a Dv50 particle size of 100 nm to 8 µm. The core-shell structured polymer with an appropriate particle size helps to improve uniformity of the conductive slurry to as to prepare electrode plates with uniform quality.

In any of embodiments, the monomer represented by the formula I is selected from one or more of vinylidene fluoride, tetrafluoroethylene, chlorotrifluoroethylene, and hexafluoropropylene.

In any of embodiments, the monomer represented by the formula II is selected from one or more of acrylamide, methacrylamide and butenamide.

In any of embodiments, the monomer represented by the formula III is selected from one or more of acrylonitrile, methacrylonitrile, 2-methyl-2-butenenitrile and 3-butenenitrile.

A second aspect of the present application provides a preparation method of a core-shell structured polymer, the preparation method including the following steps:
preparing a core of the core-shell structured polymer by polymerization of a monomer represented by formula I and a monomer represented by formula II on conditions enabling polymerization, and preparing a shell of the core-shell structured polymer by polymerization of the monomer represented by the formula I and a monomer represented by formula III, the shell at least partially covering the core, 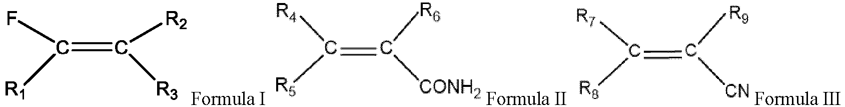
where R₁, R₂ and R₃ are each independently selected from one or more of hydrogen, fluorine, chlorine, and fluorine-substituted C₁₋₃ alkyl, and R₄, R₅, R₆, R₇, R₈ and R₉ are each independently selected from one or more of hydrogen, substituted or unsubstituted C₁₋₅ alkyl.

The core-shell structured polymer prepared by the method can reduce viscosity of the slurry, improve filterability of the conductive slurry, and improve anti-gelling property and storage performance of the conductive slurry as the slurry will not be gelled after 60 days of storage, thus broadening a process window of the conductive slurry greatly, improving processability of the conductive slurry, enabling the conductive slurry to meet production requirements without the need of adding a dispersant, and further reducing direct-current impedance of the battery.

In any of embodiments, R₁ in the formula I is fluorine, and R₂ and R₃ are each independently selected from one or more of hydrogen, fluorine, chlorine and trifluoromethyl.

In any of embodiments, the molar content of the monomer represented by the formula I is 50% to 80% based on the total number of moles of the monomer represented by the formula I, the monomer represented by the formula II and the monomer represented by the formula III.

In any of embodiments, the molar content of the monomer represented by the formula II is 10% to 20% based on the total number of moles of the monomer represented by the formula I, the monomer represented by the formula II and the monomer represented by the formula III.

In any of embodiments, the molar content of the monomer represented by the formula III is 10% to 30% based on the total number of moles of the monomer represented by the formula I, the monomer represented by the formula II and the monomer represented by the formula III.

In any of embodiments, the polymerization includes a first stage of polymerization and a second stage of polymerization,
the first stage of polymerization: adding an initiator, a first emulsifier, at least one monomer represented by the formula I, at least one monomer represented by the formula II, and an aqueous medium into a reaction vessel to carry out the first stage of polymerization, and continuously feeding the monomer represented by the formula I in the first stage of polymerization to maintain a constant reaction pressure; and
the second stage of polymerization: after reacting for a period of time, adding an initiator, a second emulsifier, at least one monomer represented by the formula III and an aqueous medium into the reaction vessel to carry out the second stage of polymerization to obtain the core-shell structured polymer, continuously feeding the monomer represented by the formula I until all the monomer represented by the formula I is fed into the reaction vessel, and stopping the reaction when the reaction pre ssure is reduced to 0-0.2 MPa.

According to the method of the present application, a large amount of monomers represented by the formula I and the formula II are fed first to form a fluorine-containing core having high thermal stability; and a small amount of monomers represented by the formula I and the formula III are then fed to form the shell that at least encloses the core. In an emulsion system, the core-shell structure polymer is obtained by adding different monomers with different hydrophilicity step by step. The core-shell structured polymer exists in the form of a core-shell structure in the aqueous medium. Compared with a non-core-shell structured polymer prepared by simultaneously introducing all monomers into a reaction vessel, the core-shell structured polymer has the stability and dispersity improved greatly, which is conducive to improving filterability and storage performance of the conductive slurry. In addition, when the monomer represented by the formula III is fed into the reaction vessel to carry out the second stage of polymerization, the monomer represented by the formula I is continued to be fed into the reaction vessel, thus enhancing compatibility between the core and the shell of the core-shell structured polymer and improving stability of the core-shell structured polymer.

In any of embodiments, the second stage of polymerization includes adding the initiator into the reaction vessel, followed by adding a premixed solution that contains the second emulsifier, the at least one monomer represented by the formula III, and the aqueous medium.

In any of embodiments, the mass of the monomer represented by the formula I fed in the first stage of polymerization is 85% to 95% of the total mass of the monomer represented by the formula I fed in the polymerization reaction, and the mass of the monomer represented by the formula I fed in the second stage of polymerization is 5% to 15% of the total mass of the monomer represented by the formula I fed in the polymerization reaction.

A large number of fluorine-containing building blocks are located in the core of the core-shell structured polymer, which helps to slow down the gelling of the slurry and improve storage performance of the conductive slurry, thus further reducing production cost of the conductive slurry and increasing production efficiency of the conductive slurry.

In any of embodiments, the total mass percentage of the initiators added in the first stage of polymerization and the second stage of polymerization is 1% to 2%, based on the total mass of the monomer represented by the formula I, the monomer represented by the formula II and the monomer represented by the formula III.

In any of embodiments, the mass percentage of the first emulsifier is 0.1% to 0.5% based on the total mass of the monomer represented by the formula I, the monomer represented by the formula II and the monomer represented by the formula III; and the mass percentage of the second emulsifier is 0.5% to 5% based on the mass of the monomer represented by the formula III.

In any of embodiments, the mass percentage of the aqueous medium provided in the first stage of polymerization is 400% to 600% based on the total mass of the monomer represented by the formula I, the monomer represented by the formula II and the monomer represented by the formula III.

In any of embodiments, the first stage of polymerization has a reaction pressure of 6.0 MPa to 9.0 MPa and a reaction temperature of 80°C to 100°C.

In any of embodiments, the initial reaction pressure in the second stage of polymerization is lower than the reaction pressure in the first stage of polymerization, and the reaction temperature in the second stage of polymerization is higher than the reaction temperature in the first stage of polymerization.

In any of embodiments, the emulsifier is alkali metal salt of perfluorooctanoic acid, and the second emulsifier is polyoxyethylene-4-phenol-ether ammonium sulfate.

In any of embodiments, the initiator is one or both of N,N dimethylbenzylamine and ammonium persulfate.

A third aspect of the present application provides Use of the core-shell structured polymer of the first aspect in a secondary battery.

A fourth aspect of the present application provides an emulsion containing an aqueous medium, an emulsifier, and the core-shell structured polymer of the first aspect.

A fifth aspect of the present application provides a conductive slurry containing a conductive agent, an aqueous medium and the emulsion of the fourth aspect.

Compared with the way of directly adding a conductive agent during preparation of a negative electrode slurry in the existing technology, the conductive slurry of the present application can improve dispersity of the conductive agent in the negative electrode slurry and improve the conductive effect of the conductive agent in the electrode plate, thereby effectively reducing content of the conductive agent in the electrode plate, further increasing load of an active material of the negative electrode plate and im proving power performance of a battery.

In any of embodiments, the mass fraction of the conductive agent is 10.0% to 15.0% based on the total mass of the conductive slurry.

By controlling the mass fraction of the conductive agent within a suitable range, the viscosity of the conductive slurry can be optimized, thus comprehensively improving processing performance and use performance of the slurry.

In any of embodiments, the mass fraction of the core-shell structured polymer is 0.5% to 2.5% based on the total mass of the conductive slurry

By controlling the mass fraction of the core-shell structured polymer within a suitable range based on the total mass of the conductive slurry, the slurry has an appropriate viscosity, the electrode plate has good adhesion, and the processing performance and use performance of the slurry are improved comprehensively.

In any of embodiments, the conductive slurry has a solid content of 12% to 17% and a viscosity of 500 mPa·s to 1500 mPa·s.

The conductive slurry with the solid content of 12% to 17% and the viscosity of 500 mPa·s to 1500 mPa·s can be directly mixed and stirred with an active material and a binder to prepare a negative electrode slurry without the need of adding other additives, which is conducive to improving production efficiency and reducing production cost.

A sixth aspect of the present application provides a negative electrode plate, comprising a negative electrode current collector and a negative electrode film layer provided on at least one surface of the negative electrode current collector, where the negative electrode film layer comprises a negative electrode active material, a conductive agent and a binder, and the conductive agent is a deposit of the conductive slurry of the fifth aspect.

Compared with a negative electrode plate prepared by directly adding conductive agent powder in the existing technology, the negative electrode plate disclosed in the present application has the advantages that the conductive agent in the negative electrode plate exists in the form of the deposit of the conductive slurry in the negative electrode plate, which is conducive to further reducing impedance of the battery.

In any of embodiments, the adhesion force per unit length between the negative electrode film layer and the negative electrode current collector is not less than 12 N/m.

A seventh aspect of the present application provides a secondary battery, comprising a positive electrode plate, a separator, an electrolyte solution and the negative electrode plate of the sixth aspect of the present application, optionally, the secondary battery includes at least one of a lithium ion battery, a sodium ion battery, a magnesium ion battery, and a potassium ion battery.

An eighth aspect of the present application provides a battery module including the secondary battery of the seventh aspect of the present application.

A ninth aspect of the present application provides a battery pack, including the secondary battery of the seventh aspect of the present application or the battery module of the eighth aspect of the present application.

A tenth aspect of the present application provides an electrical apparatus, including at least one selected from the secondary battery of the seventh aspect of the present application, the battery module of the eighth aspect of the present application, or the battery pack of the ninth aspect of the present application.

### BRIEF DESCRIPTION OF THE DRAWINGS

Fig. 1 is a schematic structural diagram of a core-shell structured polymer according to an embodiment of the present application,
Fig. 2 is a schematic diagram of a secondary battery according to an embodiment of the present application;
Fig. 3 is an exploded view of the secondary battery according to an embodiment of the present application shown in Fig. 2;
Fig. 4 is a schematic diagram of a battery module according to an embodiment of the present application;
Fig. 5 is a schematic diagram of a battery pack according to an embodiment of the present application;
Fig. 6 is an exploded view of the battery pack according to an embodiment of the present application shown in Fig. 5; and
Fig. 7 is a schematic view of an electrical apparatus in which a secondary battery is used as a power source according to an embodiment of the present application.

Reference signs:
1 battery pack; 2 upper box; 3 lower box; 4 battery module; 5 secondary battery; 51 case; 52 electrode assembly; 53 cover plate; 6 core-shell structured polymer; 61 core; and 62 shell.

### DETAILED DESCRIPTION

Hereinafter, embodiments of the binder, preparation method, electrode plate, battery, and electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the process of preparing a secondary battery, conductive agents are usually added to improve electron transport performance, thus improving the comprehensive performance of the battery. However, existing conductive agents usually have large specific surface area and are prone to agglomeration under action of Van der Waals forces, which affects the conductivity of the active materials, and tends to lead to uneven distribution of electrode plates, thus affecting performance of the active materials. The addition of a dispersant helps to improve dispersion effect of the conductive agent. However, the introduction of the dispersant in a slurry is not conducive to the subsequent preparation of electrode plates, and is prone to problems such as slurry gelling, shortening of process windows, and poor stability of slurries between batches. Based on the above technical problems, the present application develops a polymer that enables the conductive slurry to have suitable viscosity and excellent filterability, anti-settling property and anti-gelling property, thereby improving production efficiency and production quality of the conductive slurry.

### [Core-shell structured polymer]

Based on this, the present application provides a core-shell structured polymer, comprising a core and a shell at least partially covering the core, the core containing a building block derived from a monomer represented by formula I and a building block derived from a monomer represented by formula II, and the shell containing the building block derived from the monomer represented by the formula I and a building block derived from a monomer represented by formula III, 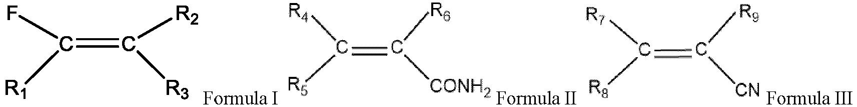 where R₁, R₂ and R₃ are each independently selected from one or more of hydrogen, fluorine, chlorine, and fluorine-substituted C₁₋₃ alkyl, and R₄, R₅, R₆, R₇, R₈ and R₉ are each independently selected from one or more of hydrogen, substituted or unsubstituted C₁₋₅ alkyl.

As used herein, the term "polymer" includes, on the one hand, chemically homogeneous macromolecular aggregates prepared by polymerization reactions, but differing in degree of polymerization, molar mass and chain length. The term also includes, on the other hand, derivatives of such macromolecular aggregates formed by polymerization reactions, i.e. products which may be obtained by reactions, e.g. addition or substitution, of functional groups in the macromolecules and which may be chemically homogeneous or chemically inhomogeneous.

As used herein, the term "C₁₋₃ alkyl" refers to a straight or branched hydrocarbon chain group only consisting of carbon and hydrogen atoms, which is a group without unsaturation, has from one to three carbon atoms, and is attached to the reset of a molecule by a single bond.

As used herein, the term "C₁₋₅alkyl" may be understood with reference to the definition of the term "C₁₋₃alkyl".

As used herein, the term "substituted" means that at least one hydrogen atom of a compound or chemical part is replaced with a substituent of another chemical part, where the substituents are each independently selected from hydroxyl, mercapto, amino, cyano, nitro, aldehyde, a halogen atom, alkenyl, alkynyl, aryl, heteroaryl, C₁₋₆ alkyl, and C₁₋₆ alkoxy.

In some embodiments, R₁ in the formula I is fluorine, and R₂ and R₃ are each independently selected from one or more of hydrogen, fluorine, chlorine and trifluoromethyl.

As used herein, the term "trifluoromethyl" refers to a -CF₃ group.

In some embodiments, the monomer represented by the formula I is selected from one or more of vinylidene fluoride, tetrafluoroethylene, chlorotrifluoroethylene, and hexafluoropropylene.

In some embodiments, the monomer represented by the formula II is selected from one or more of acrylamide, methacrylamide and butenamide.

In some embodiments, the monomer represented by the formula III is selected from one or more of acrylonitrile, methacrylonitrile, 2-methyl-2-butenenitrile and 3-butenenitrile.

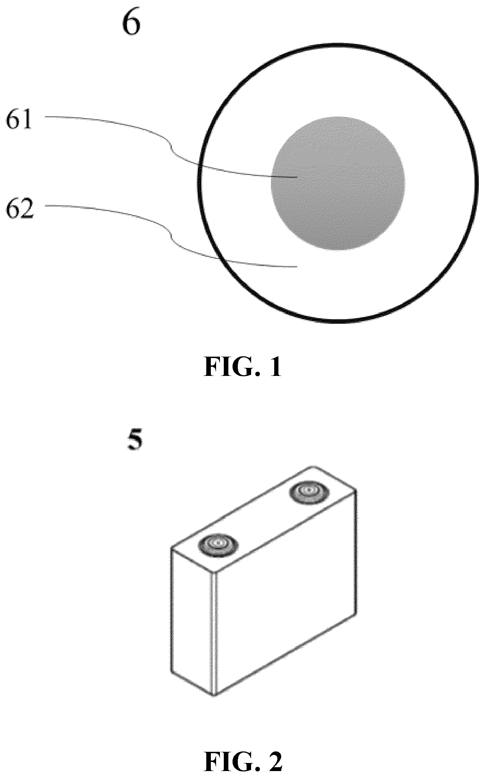

Fig. 1 is a schematic structural diagram of a core-shell structured polymer according to an embodiment of the present application. The core-shell structured polymer 6 comprises a core 61 and a shell 62. The shell 62 covers the surface of the core 61. The core 61 contains a building block derived from a monomer represented by formula I and a building block derived from a monomer represented by formula II. The core 61 contains fluorine-containing building blocks, which can improve the thermal stability and adhesion performance of the structure; the shell contains the building block derived from the monomer represented by the formula I and a building block derived from a monomer represented by formula III. The shell contains a cyano group, which can improve adhesion performance of the polymer.

Compared with traditional polyvinylidene fluoride, the core-shell structured polymer can reduce the contact area between the fluorine-containing building blocks and a solvent, play a role in reducing viscosity of the slurry, stabilizing a slurry and alleviating settling of the slurry, and effectively improve filterability of slurry.

The core-shell structured polymer of the present application can optimize viscosity of the slurry to enable the slurry to have excellent anti-settling property, anti-gelling property and filterability, and can alleviate the settling and agglomeration of a conductive agent without the need of adding an additional dispersant, thereby improving electrode plate quality and battery performance.

In some embodiments, the mass content of the core is 70% to 90% and the mass content of the shell is 10% to 30%, based on the total mass of the core-shell structured polymer. In some embodiments, the mass fraction of the core may be any one of 70%, 75%, 80%, 85%, and 90% based on the mass of the core-shell structured polymer. In some embodiments, the mass fraction of the shell may be any one of 10%, 15%, 20%, 25%, and 30% based on the mass of the core-shell structured polymer.

By controlling the mass content of the core within a suitable range, the core-shell structured polymer can further optimize the viscosity of the slurry and avoid the decrease of coating drying efficiency and adhesion force due to too-low viscosity of the slurry or the difficulty in leveling and coating process due to too-high viscosity of the slurry, thus comprehensively improving processing performance and use performance of the conductive slurry

In some embodiments, the molar content of the building block derived from the monomer represented by the formula I is 50% to 80% based on the total number of moles of all building blocks of the core-shell structured polymer. In some embodiments, the molar content of the building block derived from the monomer represented by the formula I may be any one of 50%, 60%, 70% and 80% based on the total number of moles of all building blocks of the core-shell structured polymer.

By controlling the molar content of the building block derived from the monomer represented by the formula I within a suitable range, the viscosity of the conductive slurry can be further optimized, thus comprehensively improving the processing performance and adhesion performance of the conductive slurry.

In some embodiments, the molar content of the building block derived from the monomer represented by the formula II is 10% to 20% and the molar content of the building block derived from the monomer represented by the formula III is 10% to 30%, based on the total number of moles of all building blocks of the core-shell structured polymer. In some embodiments, the molar content of the building block derived from the monomer represented by the formula II may be any one of 10%, 15% and 20% based on the total number of moles of all building blocks in the core-shell structured polymer. In some embodiments, the molar content of the building block derived from the monomer represented by the formula III may be any one of 10%, 20% and 30% based on the total number of moles of all building blocks in the core-shell structured polymer.

By controlling the molar content of the building block derived from the monomer represented by the formula II and the molar content of the building block derived from the monomer represented by the formula III within a suitable range, the viscosity of the conductive slurry can be further optimized, thus comprehensively improving processing performance and adhesion performance of the conductive slurry.

In some embodiments, the mass content of the building block derived from the monomer represented by the formula I in the core is 85% to 95% based on the total mass of building blocks derived from the monomer represented by the formula I in the core-shell structured polymer. In some embodiments, the mass content of the building block, derived from the monomer represented by the formula I, in the core may be 85%, 90% or 95% optionally based on the total mass of building blocks derived from the monomer represented by the formula I in the core-shell structured polymer.

A large number of fluorine-containing building blocks are located in the core of the core-shell structured polymer, which helps to slow down the gelling of the slurry and improve storage performance of the conductive slurry, thus further reducing production cost of the conductive slurry and increasing production efficiency of the conductive slurry.

In some embodiments, the core-shell structured polymer has a weight-average molecular weight of 100,000 to 300,000. In some embodiments, the weight-average molecular weight of the core-shell structured polymer may be any one of 100,000, 200,000, and 300,000.

As used herein, the term "weight-average molecular weight" refers to the sum of weight fractions of molecules having different molecular weights used in the polymer and the product of molecular weights corresponding thereto.

In the present application, the weight-average molecular weight of the polymer may be tested using methods known in the art, such as gel chromatography, e.g., using a Waters 2695 Isocratic HPLC type gel chromatograph (differential refractive index detector 2141). In some embodiments, the testing method includes: using a polystyrene solution specimen with a mass fraction of 3.0% as a reference, selecting a matched chromatographic column (oily: Styragel HT5DMF7.8×300mm+Styragel HT4); and preparing a 3.0% core-shell structured polymer colloidal solution from a purified N-methylpyrrolidone (NMP) solvent and allowing the prepared solution to stand for one day. During testing, tetrahydrofuran is drawn in by a syringe first for rinsing, which is repeated several times. Then 5 ml of testing solution is drawn in, the air in the syringe is removed, followed by drying a needle tip. Finally, the sample solution is slowly injected into an injection port. After the reading display is stable, data is obtained to read the weight-average molecular weight.

By controlling the weight-average molecular weight of the core-shell structured polymer within a suitable range, the core-shell structured polymer has good solubility in the slurry, is less prone to agglomerate with the conductive agent and enables uniform dispersion of the conductive agent in the slurry; besides, the appropriate weight-average molecular weight helps the binder to form a three-dimensional mesh bonding structure to play an effective bonding effect, so that both the adhesion of the electrode plate and the filterability of the conductive slurry can be taken into account, comprehensively improving the adhesion performance and processing performance of the electrode plate.

In some embodiments, the core-shell structured polymer has a Dv50 particle size of 100 nm to 8 µm. In some embodiments, the Dv50 particle size of the core-shell structured polymer may be any one of 100 nm, 1 µm, 2 µm, 3 µm, 4 µm, 5 µm, 6 µm, 7 µm, and 8 µm.

As used herein, the term "Dv50 particle size" refers to a particle size corresponding to a cumulative size distribution number of particles in a size distribution curve that reaches 50%, which has a physical meaning that particles with a size less than (or greater than) this particle size account for 50%.

The core-shell structured polymer with an appropriate particle size helps to improve uniformity of the conductive slurry to as to prepare electrode plates with uniform quality.

In an embodiment of the present application, there is provided a preparation method of a core-shell structured polymer, the preparation method including the following steps:
preparing a core of the core-shell structured polymer by polymerization of a monomer represented by formula I and a monomer represented by formula II on conditions enabling polymerization, and preparing a shell of the core-shell structured polymer by polymerization of the monomer represented by the formula I and a monomer represented by formula III, the shell at least partially covering the core, 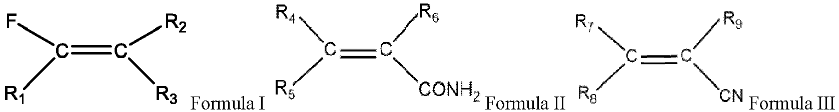
where R₁, R₂ and R₃ are each independently selected from one or more of hydrogen, fluorine, chlorine, and fluorine-substituted C₁₋₃ alkyl, and R₄, R₅, R₆, R₇, R₈ and R₉ are each independently selected from one or more of hydrogen, substituted or unsubstituted C₁₋₅ alkyl.

As used herein, the term "conditions enabling polymerization" refers to those conditions including temperature, pressure, reactant concentration, optional solvents/diluents, reactant mixing/addition parameters selected by those skilled in the art, and other conditions contributing to reactions of the one or more monomers in at least one polymerization reactor.

The core-shell structured polymer prepared by the method can reduce viscosity of the slurry and improve filterability of the slurry, thus greatly broadening a process window of the slurry, improving processability of the slurry, enabling the slurry to meet production requirements of an aqueous conductive slurry without the need of adding a dispersant, and facilitating the optimization of the production process for the aqueous conductive slurry and the improvement of the production efficiency thereof.

In some embodiments, the molar content of the monomer represented by the formula I is 50% to 80% based on the total number of moles of the monomer represented by the formula I, the monomer represented by the formula II and the monomer represented by the formula III. In some embodiments, the molar content of the monomer represented by the formula I may be any one of 50%, 60%, 70% and 80% based on the total number of moles of the monomer represented by the formula I, the monomer represented by the formula II and the monomer represented by the formula III.

In some embodiments, the molar content of the monomer represented by the formula II is 10% to 20% based on the total number of moles of the monomer represented by the formula I, the monomer represented by the formula II and the monomer represented by the formula III. In some embodiments, the molar content of the monomer represented by the formula II may be any one of 10%, 15% and 20% based on the total number of moles of the monomer represented by the formula I, the monomer represented by the formula II and the monomer represented by the formula III.

In some embodiments, the molar content of the monomer represented by the formula III is 10% to 30% based on the total number of moles of the monomer represented by the formula I, the monomer represented by the formula II and the monomer represented by the formula III. In some embodiments, the molar content of the monomer represented by the formula III may be any one of 10%, 20% and 30% based on the total number of moles of the monomer represented by the formula I, the monomer represented by the formula II and the monomer represented by the formula III.

In some embodiments, the preparation method includes a first stage of polymerization and a second stage of polymerization,
the first stage of polymerization: adding an initiator, a first emulsifier, at least one monomer represented by the formula I, at least one monomer represented by the formula II, and an aqueous medium into a reaction vessel to carry out the first stage of polymerization, and continuously feeding the monomer represented by the formula I in the first stage of polymerization to maintain a constant reaction pressure; and
the second stage of polymerization: after reacting for a period of time, adding an initiator, a second emulsifier, at least one monomer represented by the formula III and an aqueous medium into the reaction vessel to carry out the second stage of polymerization to obtain the core-shell structured polymer, continuously feeding the monomer represented by the formula I until all the monomer represented by the formula I is fed into the reaction vessel, and stopping the reaction when the reaction pre ssure is reduced to 0-0.2 MPa.

Herein, "continuous feeding" means adding slowly, stably and gradually in the polymerization process.

According to the method of the present application, a large amount of monomers represented by the formula I and the formula II are fed first to form a fluorine-containing core having high thermal stability; and a small amount of monomers represented by the formula I and the formula III are then fed to form the shell that at least encloses the core. In an emulsion system, the core-shell structure polymer is obtained by adding different monomers with different hydrophilicity step by step. The core-shell structured polymer exists in the form of a core-shell structure in the aqueous medium. Compared with a non-core-shell structured polymer prepared by simultaneously introducing all monomers into a reaction vessel, the core-shell structured polymer has the stability and dispersity improved greatly, which is conducive to improving filterability and storage performance of the conductive slurry.

In some embodiments, the mass of the monomer represented by the formula I fed in the first stage of polymerization is 85% to 95% of the total mass of the monomer represented by the formula I fed in the polymerization reaction, and the mass of the monomer represented by the formula I fed in the second stage of polymerization is 5% to 15% of the total mass of the monomer represented by the formula I fed in the polymerization reaction.

A large number of fluorine-containing building blocks are located in the core of the core-shell structured polymer, which helps to slow down the gelling of the slurry and improve storage performance of the conductive slurry, thus further reducing production cost of the conductive slurry and increasing production efficiency of the conductive slurry.

In some embodiments, the second stage of polymerization includes adding the initiator into the reaction vessel, followed by adding a premixed solution that contains the second emulsifier, the at least one monomer represented by the formula II, the monomer represented by the formula III and the aqueous medium.

In some embodiments, the total mass percentage of the initiators added in the first stage of polymerization and the second stage of polymerization is 1% to 2%, based on the total mass of the monomer represented by the formula I, the monomer represented by the formula II and the monomer represented by the formula III.

In some embodiments, the mass percentage of the initiator in the first stage of polymerization is 0.05% to 1.5% and the mass percentage of the initiator in the second stage of polymerization is 0.005% to 0.5%, based on the total mass of the monomer represented by the formula I, the monomer represented by the formula II and the monomer represented by the formula III.

In some embodiments, the mass percentage of the first emulsifier is 0.1% to 0.5% based on the total mass of the monomer represented by the formula I, the monomer represented by the formula II and the monomer represented by the formula III.

In some embodiments, the mass percentage of the second emulsifier is 0.5% to 5% based on the mass of the monomer represented by the formula III.

In some embodiments, the mass percentage of the aqueous medium provided in the first stage of polymerization is 400% to 600% and the mass percentage of the aqueous medium provided in the second stage of polymerization is 100% to 300%, based on the total mass of the monomer represented by the formula I, the monomer represented by the formula II and the monomer represented by the formula III.

In some embodiments, the aqueous medium provided in the first stage polymerization and the aqueous medium provided in the second stage polymerization are deionized water having a conductivity less than or equal to 2 µs/cm.

In some embodiments, the first stage of polymerization has a reaction pressure of 6.0 MPa to 9.0 MPa and a reaction temperature of 80°C to 100°C.

In some embodiments, the second stage of polymerization has a reaction pressure of 4.0 MPa to 7.0 MPa and a reaction temperature of 86°C to 95°C.

In some embodiments, the first initiator and the second initiator may be selected from one or both of N,N-dimethylbenzylamine and ammonium persulfate.

N,N-dimethylbenzylamine and ammonium persulfate can be effectively decomposed above 60°C to produce radical ions or ionic radicals, which are suitable to be used as initiators for emulsion polymerization.

In some embodiments, the first emulsifier is alkali metal salt of perfluorooctanoic acid, and optionally sodium perfluorooctanoate.

The alkali metal salt of perfluorooctanoic acid is often used as an emulsifier or dispersant in the polymerization reaction of fluorine-containing monomers.

In some embodiments, the second emulsifier is one or both of polyoxyethylene-4-phenol ether ammonium sulfate and nonylphenol polyoxyethylene ether ammonium sulfate.

The polyoxyethylene-4-phenol ether ammonium sulfate and the nonylphenol polyoxyethylene ether ammonium sulfate are both anionic-nonionic emulsifiers, which have both anionic and nonionic properties, and which can be used alone in emulsion polymerization without the need to be used in conjunction with other emulsifiers.

In an embodiment of the present application, there is provided use of the core-shell structured polymer in any of embodiments in a secondary battery. Optionally, the secondary battery includes at least one of a lithium ion battery, a sodium ion battery, a magnesium ion battery, and a potassium ion battery.

In some embodiments, the core-shell structured polymer is used as a binder in the secondary battery.

In some embodiments, the core-shell structured polymer is used as a binder of the conductive slurry in a secondary battery.

### [Conductive slurry]

In an embodiment of the present application, there is provided a conductive slurry, containing a binder, a conductive agent and an aqueous medium, the binder containing the core-shell structured polymer as described in any of embodiments.

As used herein, the term "binder" refers to a chemical compound, polymer or mixture that forms a colloidal solution or colloidal dispersion in a dispersion medium.

In some embodiments, the dispersion medium of the binder is an aqueous medium, such as deionized water. That is, the binder is dissolved in the aqueous medium.

Compared with a non-core-shell structured polymer, the core-shell structured polymer has the improved stability and dispersity, which helps to improve filterability, dispersity and storage performance of the conductive slurry and enhance performance of the battery.

In some embodiments, the core-shell structure polymer is added to the conductive slurry in the form of an emulsion containing the core-shell structure polymer.

The core-shell structure polymer prepared by the preparation method in any of the above embodiments exists in the form of the emulsion and can be directly added to the conductive slurry for use, thereby reducing production cost and improving production efficiency.

In some embodiments, the mass fraction of the conductive agent is 10.0% to 15.0% based on the total mass of the conductive slurry.

When the mass fraction of the conductive agent is less than 10.0% based on the total mass of the conductive slurry, the amount of residual solvent is too small during the slurry mixing process in preparation of a the cell electrode plate, which is not conducive to dissolution and dispersion of the binder; when the mass fraction of the conductive agent is greater than 15.0% based on the total mass of the conductive slurry, the conductive slurry has a high viscosity, with large viscosity rebound and poor fluidity, which is not conducive to material feeding in industrial production.

In some embodiments, the mass fraction of the core-shell structured polymer is 0.5% to 2.5% based on the total mass of the conductive slurry.

When the mass fraction of the core-shell structure polymer is less than 0.5% based on the total mass of the conductive slurry, the adhesion performance of the conductive slurry deteriorates, when the mass fraction of the core-shell structure polymer is greater than 2.5% based on the total mass of the conductive slurry, the viscosity of the conductive slurry is high, the uniformity of the electrode sheet deteriorates, which is not conducive to reducing the impedance of the battery.

In some embodiments, when the conductive slurry has a solid content of 12% to 17%, it has a viscosity of 500 mPa·s to 1500 mPa·s. In some embodiments, the viscosity of the conductive slurry may be 600 mPa·s, 700 mPa·s, 800 mPa·s, 900 mPa·s, 1000 mPa·s, 1100 mPa·s, 1200 mPa·s, 1300 mPa·s, 1400 mPa·s, or 1500 mPa·s. When the conductive slurry prepared from the core-shell structured polymer has the solid content of 12% to 17% and the viscosity of 500 mPa·s to 1500 mPa·s, the conductive slurry has an appropriate viscosity and does not need to be added with an additional dispersant or thickener for improving processability, which helps to increase the production efficiency and optimize the production process.

In an embodiment of the present application, there is provided a secondary battery, comprising a positive electrode plate, a separator, a negative electrode plate and an electrolyte. In some embodiments, the secondary battery includes at least one of a lithium ion battery, a sodium ion battery, a magnesium ion battery, and a potassium ion battery. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate comprises a positive electrode current collector and a positive electrode film layer provided on at least one surface of the positive electrode current collector.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mm_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such asLiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. For example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by dispersing the components for preparing the positive electrode plate, for example, the positive electrode active material, the conductive agent, the binder and any other components in a solvent (e.g., N-methyl pyrrolidone) to form a positive electrode slurry; coating the surface of the current collector with the conductive slurry in any of embodiments and drying to form an aqueous conductive slurry, i.e., an aqueous under-coat current collector; and coating the aqueous under-coat current collector with the positive electrode slurry, followed by oven drying, cold pressing and other procedures, to obtain the positive electrode plate.

### [Negative electrode plate]

A negative electrode plate, comprising a negative electrode current collector and a negative electrode film layer provided on at least one surface of the negative electrode current collector, where the negative electrode film layer comprises a negative electrode active material, a conductive agent and a binder, and the conductive agent is a deposit of the conductive slurry in any of embodiments of the present application.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other additives, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent in any of embodiments of the present application, the binder and any other components in a solvent (for example, deionized water) to form a negative electrode slurry, and coating the negative electrode current collector with the negative electrode slurry, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag -type soft pack. The material of the soft bag may be a plastic, and examples of the plastic may include polypropylene, polybutylene terephthalate, polybutylene succinate, and the like.

The shape of the secondary battery is not particularly limited in the present application, and may be a cylinder, a square, or any other shape. For example, Fig. 2 shows an example of a secondary battery 5 having a square structure.

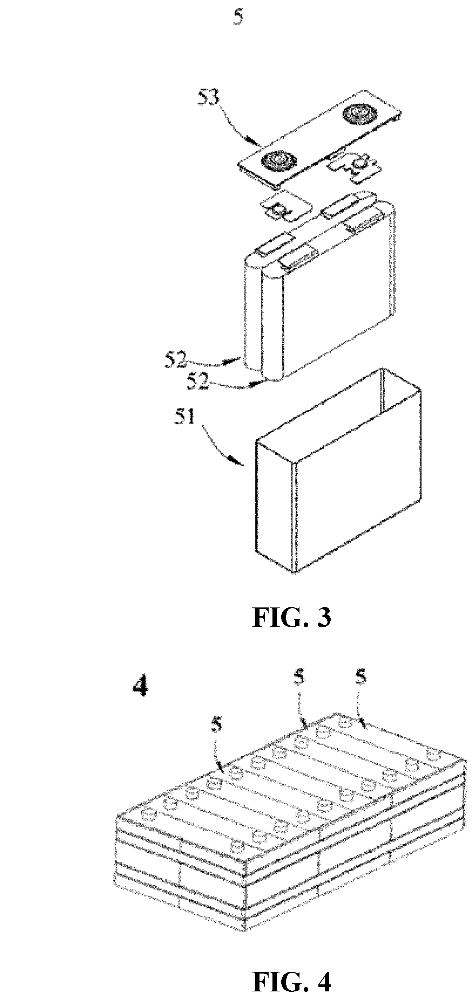

In some embodiments, referring to Fig. 3, the outer package may include a case 51 and a cover plate 53. The case 51 may include a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electro de assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

Fig. 4 shows a battery module 4 as an example. Referring to Fig. 4, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

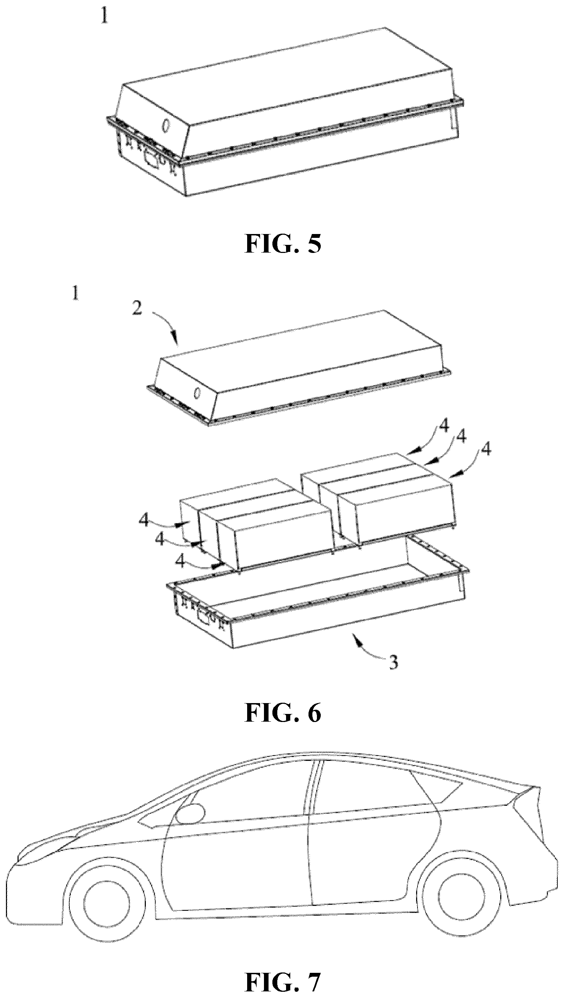

Figs. 5 and 6 show a battery pack 1 as an example. Referring to Fig. 5 and Fig. 6, the battery pack 1 may include a battery box and a plurality of battery modules 4 arranged in the battery box. The battery box includes an upper box body 2 and a lower box body 3. The upper box body 2 can cover the lower box body 3 to form enclosed space for accommodating the battery modules 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack can be selected according to the requirements during use.

Fig. 7 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### EXAMPLES

Embodiments of the present application will be described below. The embodiments described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

### 1) Preparation of core-shell structured polymer

The first stage of polymerization: 21 kg of deionized water, 17.45 g of sodium perfluorooctanoate, 84.77 g of N,N-dimethylbenzylamine, and 905 g of acrylamide monomer were added into a reaction kettle in sequence, followed by closing the kettle, where the deionized water has a conductivity less than or equal to 2 µs/cm.

The kettle was evacuated and filled with nitrogen, followed by repeating the operation until oxygen concentration in the reaction kettle was less than 100 ppm.

A vinylidene fluoride monomer was introduced into the reaction kettle until pressure in the kettle was 8.0 MPa; the kettle was heated up to 85°C to start a reaction, and the vinylidene fluoride monomer was continued to be introduced into the kettle during the reaction process to maintain a constant reaction pressure in the kettle.

The second stage of polymerization: 9kg of deionized water (the conductivity of the deionized water is less than or equal to 2 µs/cm), 10.14g of polyoxyethylene-4-phenol ether ammonium sulfate, and 1014g of acrylonitrile monomer were added into a stirring tank and mixed well to obtain a premixed solution.

When the total amount of the vinylidene difluoride monomer was 3877g, 16.22g of 5% ammonium persulfate was added, with the reaction pressure adjusted to 7.0 MPa and the temperature raised to 95°C, and then, the premixed solution was slowly added into the reaction kettle, while the remaining 204g of vinylidene fluoride monomer was gradually introduced into the kettle, where it took 1.0 hour to add all the premixed solution.

The reaction was stopped when the pressure in the kettle was reduced to 0.2 MPa.

It was cooled to room temperature and filtered and discharged to obtain an emulsion containing a core-shell structured polymer, where a core of the core-shell structured polymer is mainly composed of vinylidene fluoride and acrylamide, and a shell thereof is composed of a small amount of vinylidene fluoride and acrylonitrile. The Dv50 particle size of a core-shell structured vinylidene fluoride-acrylamide-acrylonitrile copolymer was 260 nm.

### 2) Preparation of conductive slurry

The solid content of an emulsion of the core-shell structured vinylidene fluoride-acrylamide-acrylonitrile copolymer was adjusted to 40%.

16.4kg of deionized water and 1kg of emulsion of the core-shell structured vinylidene difluoride-acrylamide-acrylonitrile copolymer were weighed and added into a 35L stirring tank sequentially, and were stirred for 60 minutes at a stirring speed of 1000 rpm to obtain a preformed colloidal solution of the core-shell structured vinylidene difluoride-acrylamide-acrylonitrile copolymer.

2.6 kg of conductive carbon black powder was weighed and then added into the stirring tank that contains the preformed colloidal solution, and was stirred for 60 minutes at a stirring speed of 1000 rpm.

The above slurry was filtered by means of a 300-mesh screen to obtain a conductive slurry.

### 3) Preparation of negative electrode plate

An active material, i.e., artificial graphite, the above-mentioned conductive slurry, a binder, i.e., styrene-butadiene rubber (SBR), and a thickener, i.e., sodium hydroxymethylcellulose (CMC) were mixed in a solvent, i.e., deionized water, and specifically, the artificial graphite, the conductive carbon black, the SBR, and the CMC at a weight ratio of 96.2: 0.8: 0.8: 1.2 were uniformly mixed to obtain a negative electrode slurry, and the negative electrode slurry was uniformly applied on a coper foil for a ne gative electrode current collector one or more times, followed by oven drying, cold pressing, and cutting to obtain a negative electrode plate.

### 4) Preparation of positive electrode plate

A lithium nickel cobalt manganese (NCM) material, a conductive, i.e., agent carbon black, a polyvinylidene fluoride binder and N-methylpyrrolidone (NMP) were mixed at a weight ratio of 96.9:2.1:1:21 and uniformly stirred to obtain a positive electrode slurry having a solid content of 73%; after that, the positive electrode slurry was uniformly applied on an aluminum foil for a positive electrode current collector, followed by oven drying, cold pressing and cutting to obtain a positive electrode plate.

### 5) Separator

A polypropylene film was used as the separator.

### 6) Preparation of electrolyte solution

In a glove box in an argon atmosphere (H₂O<0.1ppm, O₂<0.1ppm), an organic solvent of ethylene carbonate (EC)/ethyl methyl carbonate (EMC) was mixed uniformly in a volume ratio of 3/7, lithium salt of LiPF₆ with a mass ratio of 12.5% was dissolved in the organic solvent and stirred uniformly to obtain an electrolyte solution of Example 1.

### 7) Preparation of battery

The positive electrode plate, the separator and the negative electrode plate were stacked in sequence, the separator was positioned between the positive electrode plate and the negative electrode plate and functioned to separate, and then a bare cell was obtained by winding, a tab was welded to the bare cell, the bare cell was mounted into an aluminum case, baked at 80°C to remove water, and then the electrolyte solution was injected and encapsulated to obtain an uncharged battery. The uncharged battery then went through processes such as standing, hot and cold pressing, formation, shaping and capacity testing successively to obtain a lithium-ion battery product of Example 1.

### Examples 2 to 5

The preparation methods in Examples 2 to 5 are basically the same as that in Example 1, with the difference being that the molar contents of the core and the shell and the ratio of each monomer in synthesis of the core-shell structured polymer were adjusted. The specific parameters are shown in Tables 1 and 2.

### Examples 6 to 9

The preparation methods in Examples 6 to 9 are basically the same as that in Example 1, with the difference being that the mass of the initiator and the reaction temperature in synthesis of the core-shell structured polymer were adjusted such that the core-shell structured polymers have different weight-average molecular weights. The specific parameters are shown in Tables 1 and 2.

Specifically, in the preparation method of the core-shell structured polymer having a weight-average molecular weight of 100,000 in Example 6, the addition amount of N,N dimethylbenzylamine was adjusted to 89.0g.

In the preparation method of the core-shell structured polymer having a weight-average molecular weight of 300,000 in Example 7, the reaction temperature was adjusted to 80° C, and the addition amount of N,N dimethylbenzylamine was adjusted to 80.53g.

In the preparation method of the fluoropolymer having a weight-average molecular weight of 50,000 in Example 8, the addition amount of N,N dimethylbenzylamine was adjusted to 93.25 g.

In the preparation method of the fluoropolymer having a weight-average molecular weight of 400,000 in Example 9, the reaction was adjusted to 80° C, and the addition amount of N,N dimethylbenzylamine was adjusted to 76.29g.

### Examples 10 to 12

The preparation methods in Examples 10 to 12 are basically the same as that in Example 1, with the difference being that the type of comonomers in synthesis of the core-shell structured polymer was adjusted. The specific parameters are shown in Tables 1 and 2.

### Examples 13 to 16

The preparation methods in Examples 13 to 16 are basically the same as that in Example 1, with the difference being that the mass fraction of the core-shell structured polymer in the conductive slurry was adjusted. The specific parameters are shown in Tables 1 and 2.

### Examples 17 to 20

The preparation methods in Examples 17 to 20 are basically the same as that in Example 1, with the difference being that the mass fraction of the conductive agent in the conductive slurry was adjusted. The specific parameters are shown in Tables 1 and 2.

### Comparative Example 1

The preparation method in Comparative Example 1 is basically the same as that in Example 1, with the difference being that the conductive slurry was made with a vinylidene fluoride polymer instead of a core-shell structured polymer.

### Comparative Example 2

The preparation method in Comparative Example 2 is basically the same as that in Example 1, with the difference being that the conductive slurry was made with a vinylidene fluoride-acrylamide polymer instead of a core-shell structured polymer. The preparation method is as follows:
30kg of deionized water, 17.45g of sodium perfluorooctanoate, 84.77g of N,N-dimethylbenzylamine, 905g of acrylamide monomer, 10.14g of polyoxyethylene-4-phenol ether ammonium sulfate, and 1014g of acrylonitrile monomer were added into a reaction kettle sequentially, followed by closing the reaction kettle, where the deionized water has a conductivity less than or equal to 2 µs/cm.

The kettle was evacuated and filled with nitrogen, followed by repeating the operation until oxygen concentration in the reaction kettle was less than 100 ppm.

A vinylidene fluoride monomer was introduced into the reaction kettle until pressure in the kettle was 8.0 MPa; the kettle was heated up to 85°C to start a reaction, and the vinylidene fluoride monomer was continued to be introduced into the kettle during the reaction process to maintain a constant reaction pressure in the kettle.

After 4081g of vinylidene difluoride monomer was all introduced into the kettle, the reaction was stopped when the pressure in the kettle was reduced to 0.2MPa.

It was cooled to room temperature and filtered and discharged to obtain a vinylidene fluoride-acrylamide copolymer.

### Comparative Example 3

The preparation method in Comparative Example 3 is basically the same as that in Example 1, with the difference being that the conductive slurry was made with a vinylidene fluoride-acrylonitrile polymer instead of the core-shell structured polymer. The preparation method is similar to that in Comparative Example 2.

### Comparative Example 4

The preparation method in Comparative Example 4 is basically the same as that in Example 1, with the difference being that the emulsion of the core-shell structured vinylidene fluoride-acrylamide-acrylonitrile copolymer was replaced with an emulsion of a vinylidene fluoride-acrylamide-acrylonitrile copolymer prepared by conventional methods. The synthesis method includes:
30kg of deionized water (the conductivity of the deionized water is less than or equal to 2 µs/cm,), 17.45g of alkali metal salt of perfluorooctanoic acid, 84.77g of N,N dimethylbenzylamine, 10.14g of polyoxyethylene-4-phenol ether ammonium sulphate, 16.22g of ammonium persulphate solution at a concentration of 5%, 1014g of acrylonitrile, and 905g of acrylamide were added into a reaction kettle in sequence, followed by closing the reaction kettle.

The reactor was vacuumed and filled with nitrogen, and the operation was repeated until the oxygen concentration in the reactor was less than 100 ppm.

A vinylidene fluoride monomer was introduced into the reaction kettle until pressure in the kettle was 8.0 MPa; the kettle was heated up to 85°C to start a reaction, and the vinylidene fluoride monomer was continued to be introduced into the kettle during the reaction process to maintain a constant reaction pressure in the kettle. The total mass of the vinylidene fluoride monomer introduced was 4.08kg.

The reaction was stopped when the pressure in the kettle was reduced to 0.2 Mpa, followed by recovering the unreacted vinylidene fluoride monomer.

It was cooled to room temperature and filtered and discharged to obtain the emulsion containing the vinylidene fluoride-acrylamide-acrylonitrile copolymer.

In Comparative Example 5, instead of adding the conductive slurry during preparation of the negative electrode plate, conductive carbon black in equivalent mass was added.

In Comparative Example 6, the conductive slurry was added during preparation of the negative electrode plate, and the conductive slurry was prepared by a similar method as the conductive slurry in Example 1, except that the core-shell structured vinylidene fluoride-acrylamide-acrylonitrile copolymer was replaced with the same mass of sodium carboxymethyl cellulose (CMC).

### II. Testing method

### 1. Characterization of core-shell structured polymer

### (1) Measurement of weight-average molecular weight of core-shell structured polymer

An emulsion containing a core-shell structured polymer was dried in vacuum at 100°C for 180 minutes to obtain core-shell structure polymer powder.

A Waters 2695 Isocratic HPLC type gel chromatograph (differential refractive index detector 2141) was used. A polystyrene solution specimen with a mass fraction of 3.0% was used as a reference, and a matched chromatographic column (oily: Styragel HT5DMF7.8×300mm+Styragel HT4) was selected; A 3.0% core-shell structured polymer colloidal solution was prepared from a purified N-methylpyrrolidone (NMP) solvent, followed by allowing the prepared solution to stand for one day. During testing, tetrahydrofuran was drawn in by a syringe first for rinsing, which was repeated several times. Then 5 ml of testing solution was drawn in, the air in the syringe was removed, followed by drying a needle tip. Finally, the sample solution was slowly injected into an injection port. After the reading display was stable, data was obtained to read the weight-average molecular weight.

### (2) Dv50 particle size testing for core-shell structured polymer

Referring to GB/T 19077-2016 Particle size analysis - Laser diffraction methods, 0.1g to 0.13g of core-shell structured polymer emulsion was weighed in a 50ml beaker, 5g of deionized water was weighed and added to the beaker containing the core-shell structured polymer emulsion, a stirring bar with a length of about 2.5mm was put in the beaker, and the beaker was sealed with plastic wrap. A sample was placed in an ultrasonic machine for 5 minutes, and then transferred to a magnetic stirrer and stirred at a speed of 500 r/min for more than 20 minutes. Two samples were taken from each batch of products for testing. The measurement was performed using a laser particle size analyzer, such as a Mastersizer 2000E laser particle size analyzer from Malvern Instruments Ltd., UK.

### 2. Property testing of conductive slurry

### (1) Filterability testing

A 500 ml beaker was placed at the lower end of a 200-mesh screen holder, 500 ml of conductive slurry was taken and placed in the screen for filtration, and the time when the volume of a slurry in the beaker reached 300 ml was recorded.

### (2) Solid content of conductive slurry and difference between solid contents of upper/lower layers after standing for 24 hours

A copper foil was weighed by a weight-loss meter, with its weight value denoted as M0 and then cleared it to zero.

A small amount of conductive slurry was applied on the copper foil, then put into a moisture meter for weighing, with its weight value denoted as M1.

Drying was started after the device was closed.

After drying, the weighing data was recorded and denoted as M2, followed by calculating to obtain the solid content of (M2-M0)/(M1-M0).

The solid contents of the upper and lower layers of the conductive slurry were measured in the same way after standing for 24 hours, and the solid content of the lower layer of the conductive slurry subtracted the solid content of the upper layer of conductive slurry to obtain the difference between the solid contents of the upper and lower layers after the conductive slurry was subjected to standing for 24 hours.

### (3) Gelling state testing for conductive slurry after standing for 60 days

A steel ruler was used to pick up the slurry in the beaker, followed by determining whether the slurry was gelled or not according to the slurry flowing state. If the slurry is not gelled, it is denoted as "OK", if the slurry is gelled, it is denoted as "NG".

With gel: the slurry is lumpy or fails to flow naturally and continuously.

Without gel: the slurry flows naturally and continuously, and the slurry flows evenly on the surface of the steel ruler without lumps.

### 3. Adhesion force of electrode plate

With reference to the GB-T2790-1995 national standard "Adhesive 180° peel strength testing method", the adhesion force testing process in the examples and comparative examples of the present application is as follows: a specimen with a width of 30mm and a length of 100-160mm was cut by means of a blade, and a special double-sided tape with a width of 20mm and a length of 90-150 mm was adhered on a steel plate. A negative electrode film layer of the electrode plate specimen cut out earlier was attached on the double-sided adhesive tape, and then rolled three times in the same direction with a 2 kg of press roll. A paper tape with the same width as the electrode plate and a length of 250 mm was fixed on the electrode plate current collector, and fixed with a furrow tape. A power supply of a Sansi tensile machine (sensitivity, 1N) was turned on, with an indicator light turned on, a position-limiting block was adjusted to an appropriate position, and the end of a steel plate that was not attached with the electrode plate was fixed with a lower clamp. The paper tape was folded upward and fixed with an upper clamp. The position of the upper clamp was adjusted using the "up" and "down" buttons on a manual controller provided on the tensile machine. Then testing was carried out, followed by value reading. The stretching speed was 50 mm/min. A force on the electrode plate in force balance was divided by the width of the adhesive tape to be used as the adhesion force of the negative electrode plate per unit length so as to characterize the adhesive strength between the positive electrode film layer and the current collector.

### 4. Battery performance testing

### (1) Battery direct-current impedance

At 25°C, the secondary battery was charged to 4.2V with a constant current at a rate of 1/3C, and then charged to a current of 0.05C with a constant voltage of 4.2V, followed by standing for 5min. Then the battery was discharged at a rate of 1/3C for 90 min, an electrode assembly was adjusted to 50% SOC, followed by standing for 60 min, and then the battery was discharged at a rate of 4C for 30S, and finally, the discharge DCR at 50% SOC was obtained based on testing data.

### III. Analysis of testing results of examples and comparative examples

Core-shell structured polymers, conductive slurries, negative electrode plates and secondary batteries of the respective examples and comparative examples were prepared by the methods described above, and the respective parameters were measured. The results are shown in Tables 1 and 2 below.

**Table 1 Preparation parameters and testing results of examples and comparative examples**

| No. | Binder | Monomer represented by Formula I | | Monomer represented by Formula II | | Monomer represented by Formula III | | Core | Shell | Weigh t averag e molec ular weight (10,00 0) |
|---|---|---|---|---|---|---|---|---|---|---|
| | | Name | Molar conten t | Name | Molar conten t | Name | Molar conten t | Mass conten t | Mass conten t | |
| Exampl e 1 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 2 | Core-shell structured vinylidene fluoride-acrylamide-acrylonitrile copolymer | Vinyliden e fluoride | 50% | Acrylamid e | 20% | Acrylonitril e | 30% | 72% | 28% | 20 |
| Exampl e 3 | Core-shell structured vinylidene fluoride-acrylamide-acrylonitrile copolymer | Vinyliden e fluoride | 80% | Acrylamid e | 10% | Acrylonitril e | 10% | 88% | 12% | 20 |
| Exampl e 4 | Core-shell structured vinylidene fluoride-acrylamide-acrylonitrile copolymer | Vinyliden e fluoride | 40% | Acrylamid e | 25% | Acrylonitril e | 35% | 68% | 32% | 20 |
| Exampl e 5 | Core-shell structured vinylidene fluoride-acrylamide-acrylonitrile copolymer | Vinyliden e fluoride | 90% | Acrylamid e | 5% | Acrylonitril e | 5% | 91% | 9% | 20 |
| Exampl e 6 | Core-shell structured vinylidene fluoride-acrylamide-acrylonitrile copolymer | Vinyliden e fluoride | 67% | Acrylamid e | 13% | Acrylonitril e | 20% | 80% | 20% | 10 |
| Exampl e 7 | Core-shell structured vinylidene fluoride-acrylamide-acrylonitrile copolymer | Vinyliden e fluoride | 67% | Acrylamid e | 13% | Acrylonitril e | 20% | 80% | 20% | 30 |
| Exampl e 8 | Core-shell structured vinylidene fluoride-acrylamide-acrylonitrile copolymer | Vinyliden e fluoride | 67% | Acrylamid e | 13% | Acrylonitril e | 20% | 80% | 20% | 5 |
| Exampl e 9 | Core-shell structured vinylidene fluoride-acrylamide-acrylonitrile copolymer | Vinyliden e fluoride | 67% | Acrylamid e | 13% | Acrylonitril e | 20% | 80% | 20% | 40 |
| Exampl e 10 | Core-shell structured vinylidene difluoride-methacryla mide-acrylonitrile copolymer | Vinyliden e fluoride | 67% | Methacryl amide | 13% | Acrylonitril e | 20% | 80% | 20% | 20 |
| Exampl e 11 | Core-shell structured vinylidene fluoride-acrylamide-methacrylon itrile copolymer | Vinyliden e fluoride | 67% | Acrylamid e | 13% | Methacrylo nitrile | 20% | 80% | 20% | 20 |
| Exampl e 12 | Core-shell structured chlorotriflu oroethylene acrylamide-acrylonitrile copolymer | Chlorotrifl uoroethyle ne | 67% | Acrylamid e | 13% | Acrylonitril e | 20% | 80% | 20% | 20 |
| Exampl e 13 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 14 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 15 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 16 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 17 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 18 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 19 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Exampl e 20 | Core-shell structured vinylidene fluoride-acrylamide-acrylonitrile copolymer | Vinyliden e fluoride | 67% | Acrylamid e | 13% | Acrylonitril e | 20% | 80% | 20% | 20 |
| Compar ative Exampl e 1 | Vinylidene fluoride polymer | Vinyliden e fluoride | 100% | / | / | / | / | / | / | 20 |
| Compar ative Exampl e 2 | Vinylidene fluoride-acrylamide copolymer | Vinyliden e fluoride | 67% | Acrylamid e | 33% | / | / | / | / | 20 |
| Compar ative Exampl e 3 | Vinylidene fluoride-acrylonitrile copolymer | Vinyliden e fluoride | 67% | / | / | Acrylonitril e | 33% | / | / | 20 |
| Compar ative Exampl e 4 | Vinylidene fluoride-acrylamide-acrylonitrile copolymer prepared by conventional methods | Vinyliden e fluoride | 67% | Acrylamid e | 13% | Acrylonitril e | 20% | / | / | 20 |
| Compar ative Exampl e 5 | Negative electrode plate prepared by conventional methods (using conductive carbon black) | / | / | / | / | / | / | / | / | / |
| Compar ative Exampl e 6 | Conductive slurry prepared by conventional methods (using CMC) | / | / | / | / | / | / | / | / | / |

**Table 2 Preparation parameters and testing results of examples and comparative examples**

| No | Binder | Conductive slurry | | | | | | Electrod e plate | Battery perform ance |
|---|---|---|---|---|---|---|---|---|---|
| | | Mass fractio n of disper sant in condu ctive slurry | Mass fraction of conductiv e agent in conductiv e slurry | Viscosit y /mPa.s | Filtration time/s | Difference between solid contents of the upper and lower layers after standing for 24 hours | Gelling state of conductiv e slurry after 60 days of storage | Adhesio n force/N/ m | DCR/m Ω |
| Example 1 | Core-shell structured vinylidene fluoride-acrylamide-acrylonitrile copolymer | 2% | 13% | 900 | 7 | 0.5% | OK | 14.6 | 0.25 |
| Example 2 | Core-shell structured vinylidene fluoride-acrylamide-acrylonitrile copolymer | 2% | 13% | 760 | 6 | 0.6% | OK | 14.2 | 0.25 |
| Example 3 | Core-shell structured vinylidene fluoride-acrylamide-acrylonitrile copolymer | 2% | 13% | 1020 | 7 | 0.7% | OK | 14.8 | 0.25 |
| Example 4 | Core-shell structured vinylidene fluoride-acrylamide-acrylonitrile copolymer | 2% | 13% | 720 | 6 | 0.5% | OK | 14.1 | 0.25 |
| Example 5 | Core-shell structured vinylidene fluoride-acrylamide-acrylonitrile copolymer | 2% | 13% | 1170 | 8 | 0.6% | OK | 15 | 0.25 |
| Example 6 | Core-shell structured vinylidene fluoride-acrylamide-acrylonitrile copolymer | 2% | 13% | 620 | 6 | 0.4% | OK | 13.9 | 0.25 |
| Example 7 | Core-shell structured vinylidene fluoride-acrylamide-acrylonitrile copolymer | 2% | 13% | 1280 | 8 | 0.5% | OK | 15.2 | 0.25 |
| Example 8 | Core-shell structured vinylidene fluoride-acrylamide-acrylonitrile copolymer | 2% | 13% | 520 | 5 | 0.7% | OK | 13.2 | 0.25 |
| Example 9 | Core-shell structured vinylidene fluoride-acrylamide-acrylonitrile copolymer | 2% | 13% | 1450 | 9 | 0.5% | OK | 16.7 | 0.25 |
| Example 10 | Core-shell structured vinylidene difluoride-methacryla mide-acrylonitrile copolymer | 2% | 13% | 930 | 7 | 0.4% | OK | 14.6 | 0.25 |
| Example 11 | Core-shell structured vinylidene fluoride-acrylamide-methacrylon itrile copolymer | 2% | 13% | 980 | 7 | 0.5% | OK | 14.8 | 0.25 |
| Example 12 | Core-shell structured chlorotrifluo roethylene-acrylamide-acrylonitrile copolymer | 2% | 13% | 1070 | 7 | 0.6% | OK | 14.9 | 0.25 |
| Example 13 | Core-shell structured vinylidene fluoride-acrylamide-acrylonitrile copolymer | 2.5% | 13% | 1120 | 8 | 0.5% | OK | 15 | 0.29 |
| Example 14 | Core-shell structured vinylidene fluoride-acrylamide-acrylonitrile copolymer | 0.5% | 13% | 600 | 6 | 0.6% | OK | 13.8 | 0.22 |
| Example 15 | Core-shell structured vinylidene fluoride-acrylamide-acrylonitrile copolymer | 0.2% | 13% | 530 | 5 | 0.6% | OK | 13.2 | 0.21 |
| Example 16 | Core-shell structured vinylidene fluoride-acrylamide-acrylonitrile copolymer | 3% | 13% | 1320 | 8 | 0.5% | OK | 16.1 | 0.32 |
| Example 17 | Core-shell structured vinylidene fluoride-acrylamide-acrylonitrile copolymer | 2% | 10% | 810 | 6 | 0.5% | OK | 15.2 | 0.28 |
| Example 18 | Core-shell structured vinylidene fluoride-acrylamide-acrylonitrile copolymer | 2% | 15% | 1090 | 7 | 0.6% | OK | 14.4 | 0.21 |
| Example 19 | Core-shell structured vinylidene fluoride-acrylamide-acrylonitrile copolymer | 2% | 8% | 660 | 5 | 0.7% | OK | 16.7 | 0.33 |
| Example 20 | Core-shell structured vinylidene fluoride-acrylamide-acrylonitrile copolymer | 2% | 18% | 1230 | 8 | 0.6% | OK | 14.1 | 0.18 |
| Comparati ve Example 1 | Vinylidene fluoride polymer | 2% | 13% | 1750 | 57 | 0.6% | NG | 17.9 | 0.46 |
| Comparati ve Example 2 | Vinylidene fluoride-acrylamide copolymer | 2% | 13% | 480 | 5 | 5.50% | OK | 10.3 | 1.2 |
| Comparati ve Example 3 | Vinylidene fluoride-acrylonitrile copolymer | 2% | 13% | 1640 | 39 | 0.7% | NG | 16.6 | 0.36 |
| Comparati ve Example 4 | Vinylidene fluoride-acrylamide-acrylonitrile copolymer prepared by conventional methods | 2% | 13% | 1540 | 32 | 0.6% | NG | 16.2 | 0.32 |
| Comparati ve Example 5 | Negative electrode plate prepared by conventional methods (using conductive carbon black) | / | / | / | / | / | / | 12.7 | 0.58 |
| Comparati ve Example 6 | Conductive slurry prepared by conventional methods (using CMC) | 2% | 6% | 1350 | 9 | 0.8% | OK | 12.9 | 0.52 |

Examples 1 to 20 all show core-shell structured polymers disclosed in the present application. The core-shell structured polymers each includes a core and a shell at least partially covering the core. The core contains a building block derived from a fluorine-containing monomer (vinylidene fluoride or chlorotrifluoroethylene) and a building block derived from an unsaturated monomer containing an amide group (acrylonitrile or methacrylonitrile). The shell contains a building block derived from a fluorine-containing monomer (vinylidene fluoride or chlorotrifluoroethylene) and a building block derived from an unsaturated monomer containing a cyano group (acrylonitrile or methacrylonitrile). As can be seen from the comparison of Examples 1 to 20 with Comparative Examples 1 to 4, the core-shell structured polymer disclosed in the present application, compared with a non-core-shell structured polymer prepared by a conventional preparation method, can effectively adjust viscosity of the conductive slurry to enable the conductive slurry to have both good anti-settling property and filterability; and the preparation of the core-shell structured polymer can significantly slow down the gelling of the conductive slurry, improve storage performance of the conductive slurry, and reduce direct-current impedance of the battery. As can be seen from Examples 1 to 5, based on the total mass of the core-shell structured polymer, the mass content of the core is 70% to 90% and the mass content of the shell is 10% to 30%. The above-described core-shell structured polymer can further optimize the viscosity of the slurry, thus comprehensively improving processing performance and adhesion performance of the conductive slurry.

As can be seen from Examples 1 to 5, the molar content of the building block derived from vinylidene fluoride is 50% to 80% based on the total number of moles of all building blocks of the core-shell structured polymer. The core-shell structured polymer can further optimize the viscosity of the slurry, thus comprehensively improving processing performance and adhesion performance of the conductive slurry.

As can be seen from Examples 1 to 5, the molar content of the building block derived from acrylamide is 10% to 20% based on the total number of moles of all building blocks of the core-shell structured polymer. The core-shell structured polymer can further optimize the viscosity of the slurry, thus comprehensively improving processing performance and adhesion performance of the conductive slurry.

As can be seen from Examples 1 to 5, the molar content of the building block derived from acrylonitrile is 10% to 30% based on the total number of moles of all building blocks of the core-shell structured polymer. The core-shell structured polymer can further optimize the viscosity of the slurry, thus comprehensively improving processing performance and adhesion performance of the conductive slurry. As can be seen from Example 1 and Examples 6 to 9, when the weight-average molecular weight of the core-shell structured polymer is 100,000 to 300,000, the core-shell structured polymerization can take into account both the adhesion force of the electrode plate and the filterability of the slurry, thus comprehensively improving adhesion performance and processing performance of the electrode plate.

As can be seen from Example 1 and Examples 13 to 16, based on the total mass of the conductive slurry, when the mass fraction of the core-shell structured polymer is 0.5% to 2.5%, the core-shell structured polymer can take into account both the high adhesion force of the electrode plate and the low impedance of the battery, thus comprehensively improving adhesion performance and electrochemical performance of the battery.

As can be seen from Example 1 and Examples 17 to 20, when the mass fraction of the conductive agent is 10.0% to 15.0%, based on the total mass of the conductive slurry, the core-shell structured polymer can take into account both the high adhesion force of the electrode plate and the low impedance of the battery, thus comprehensively improving the adhesion performance and electrochemical performance of the battery.

As can be seen from the comparison between Examples and Comparative Example 5, compared with the conductive slurry prepared by the way of directly adding the conductive carbon black, the aqueous conductive slurry prepared using the core-shell structured polymer disclosed in the present application can improve the adhesion force of the electrode as well as reduce film resistance of the electrode plate.

As can be seen from the comparison of Examples with Comparative Example 6, compared with the conductive slurry prepared by using the conventional CMC dispersant as a binder, the aqueous conductive slurry prepared using the core-shell structured polymer disclosed in the present application can not only effectively improve the dispersity, anti-settling and anti-gelling properties of the slurry, but also effectively reduce the usage amount of the conventional dispersant in the battery, improve the adhesion force of the electrode plate, and further reduce the impedance of the battery.

It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A core-shell structured polymer, comprising a core and a shell at least partially covering the core, the core containing a building block derived from a monomer represented by formula I and a building block derived from a monomer represented by formula II, and the shell containing the building block derived from the monomer represented by the formula I and a building block derived from a monomer represented by formula III, 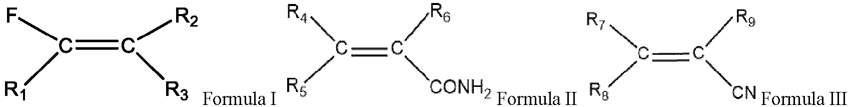 where R₁, R₂ and R₃ are each independently selected from one or more of hydrogen, fluorine, chlorine, and fluorine-substituted C₁₋₃ alkyl, and R₄, R₅, R₆, R₇, R₈ and R₉ are each independently selected from one or more of hydrogen, substituted or unsubstituted C₁₋₅ alkyl.

2. The core-shell structured polymer of claim 1, wherein R₁ in the formula I is fluorine, and R₂ and R₃ are each independently selected from one or more of hydrogen, fluorine, chlorine and trifluoromethyl.

3. The core-shell structured polymer of claim 1 or 2, wherein the mass content of the core is 70% to 90% and the mass content of the shell is 10% to 30%, based on the total mass of the core-shell structured polymer.

4. The core-shell structured polymer of any one of claim 1 to 3, wherein the molar content of the building block derived from the monomer represented by the formula I is 50% to 80% based on the total number of moles of all building blocks of the core-shell structured polymer.

5. The core-shell structured polymer of any one of claim 1 to 4, wherein the molar content of the building block derived from the monomer represented by the formula II is 10% to 20% and the molar content of the building block derived from the monomer represented by the formula III is 10% to 30%, based on the total number of moles of all building blocks of the core-shell structured polymer.

6. The core-shell structured polymer of any one of claim 1 to 5, wherein the mass content of the building block derived from the monomer represented by the formula I in the core is 85% to 95% based on the total mass of building blocks derived from the monomer represented by the formula I of the core-shell structured polymer.

7. The core-shell structured polymer of any one of claims 1 to 6, wherein the core-shell structured polymer has a weight-average molecular weight of 100,000 to 300,000.

8. The core-shell structured polymer of any one of claims 1 to 7, wherein the monomer represented by the formula I is selected from one or more of vinylidene fluoride, tetrafluoroethylene, chlorotrifluoroethylene, and hexafluoropropylene.

9. The core-shell structured polymer of any one of claims 1 to 8, wherein the monomer represented by the formula II is selected from one or more of acrylamide, methacrylamide and butenamide.

10. The core-shell structured polymer of any one of claims 1 to 9, wherein the monomer represented by the formula III is selected from one or more of acrylonitrile, methacrylonitrile, 2-methyl-2-butenenitrile and 3-butenenitrile.

11. The core-shell structured polymer of any one of claims 1 to 10, wherein the core-shell structured polymer has a Dv50 particle size of 100 nm to 8 µm.

12. A preparation method of a core-shell structured polymer, comprising the following steps:
preparing a core of the core-shell structured polymer by polymerization of a monomer represented by formula I and a monomer represented by formula II on conditions enabling polymerization, and preparing a shell of the core-shell structured polymer by polymerization of the monomer represented by the formula I and a monomer represented by formula III, the shell at least partially covering the core, 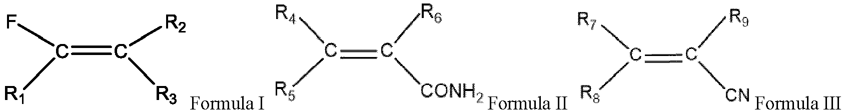
where R₁, R₂ and R₃ are each independently selected from one or more of hydrogen, fluorine, chlorine, and fluorine-substituted C₁₋₃ alkyl, and R₄, R₅, R₆, R₇, R₈ and R₉ are each independently selected from one or more of hydrogen, substituted or unsubstituted C₁₋₅ alkyl.

13. The preparation method of a core-shell structured polymer of claim 12, wherein R₁ in the formula I is fluorine, and R₂ and R₃ are each independently selected from one or more of hydrogen, fluorine, chlorine and trifluoromethyl.

14. The preparation method of a core-shell structured polymer of claim 12 or 13, wherein the molar content of the monomer represented by the formula I is 50% to 80% based on the total number of moles of the monomer represented by the formula I, the monomer represented by the formula II and the monomer represented by the formula III.

15. The preparation method of a core-shell structured polymer of any one of claims 12 to 14, wherein the molar content of the monomer represented by the formula II is 10% to 20% based on the total number of moles of the monomer represented by the formula I, the monomer represented by the formula II and the monomer represented by the formula III.

16. The preparation method of a core-shell structured polymer of any one of claims 12 to 15, wherein the molar content of the monomer represented by the formula III is 10% to 30% based on the total number of moles of the monomer represented by the formula I, the monomer represented by the formula II and the monomer represented by the formula III.

17. The preparation method of a core-shell structured polymer of any one of claims 12 to 16, wherein the polymerization comprises a first stage of polymerization and a second stage of polymerization,
the first stage of polymerization: adding an initiator, a first emulsifier, at least one monomer represented by the formula I, at least one monomer represented by the formula II, and an aqueous medium into a reaction vessel to carry out the first stage of polymerization, and continuously feeding the monomer represented by the formula I in the first stage of polymerization to maintain a constant reaction pressure; and
the second stage of polymerization: after reacting for a period of time, adding an initiator, a second emulsifier, at least one monomer represented by the formula III and an aqueous medium into the reaction vessel to carry out the second stage of polymerization to obtain the core-shell structured polymer, continuously feeding the monomer represented by the formula I until all the monomer represented by the formula I is fed into the reaction vessel, and stopping the reaction when the reaction pressure is reduced to 0-0.2 MPa.

18. The preparation method of a core-shell structured polymer of claim 17, wherein the second stage of polymerization comprises:
adding the initiator into the reaction vessel, followed by adding a premixed solution that contains the second emulsifier, the at least one monomer represented by the formula III, and the aqueous medium.

19. The preparation method of a core-shell structured polymer of claim 17 or 18, wherein the mass of the monomer represented by the formula I fed in the first stage of polymerization is 85% to 95% of the total mass of the monomer represented by the formula I fed in the polymerization reaction, and the mass of the monomer represented by the formula I fed in the second stage of polymerization is 5% to 15% of the total mass of the monomer represented by the formula I fed in the polymerization reaction.

20. The preparation method of a core-shell structured polymer of any one of claims 17 to 19, wherein the total mass percentage of the initiators added in the first stage of polymerization and the second stage of polymerization is 1% to 2%, based on the total mass of the monomer represented by the formula I, the monomer represented by the formula II and the monomer represented by the formula III.

21. The preparation method of a core-shell structured polymer of any one of claims 17 to 20, wherein the mass percentage of the first emulsifier is 0.1% to 0.5% based on the total mass of the monomer represented by the formula I, the monomer represented by the formula II and the monomer represented by the formula III; and the mass percentage of the second emulsifier is 0.5% to 5% based on the mass of the monomer represented by the formula III.

22. The preparation method of a core-shell structured polymer of any one of claims 17 to 21, wherein the mass percentage of the aqueous medium provided in the first stage of polymerization is 400% to 600% based on the total mass of the monomer represented by the formula I, the monomer represented by the formula II and the monomer represented by the formula III.

23. The preparation method of a core-shell structured polymer of any one of claims 17 to 22, wherein the first stage of polymerization has a reaction pressure of 6.0 MPa to 9.0 MPa and a reaction temperature of 80°C to 100°C.

24. The preparation method of a core-shell structured polymer of any one of claims 17 to 23, wherein the initial reaction pressure in the second stage of polymerization is lower than the reaction pressure in the first stage of polymerization, and the reaction temperature in the second stage of polymerization is higher than the reaction temperature in the first stage of polymerization.

25. The preparation method of a core-shell structured polymer of any one of claims 17 to 24, wherein the emulsifier is alkali metal salt of perfluorooctanoic acid, and the second emulsifier is polyoxyethylene-4-phenol ether ammonium sulfate.

26. The preparation method of a core-shell structured polymer of any one of claims 17 to 25, wherein the initiator is one or both of N,N dimethylbenzylamine and ammonium persulfate.

27. Use of the core-shell structured polymer of any one of claims 1 to 11 in a secondary battery.

28. An emulsion, comprising an aqueous medium, an emulsifier and the core-shell structured polymer of any one of claims 1 to 11.

29. A conductive slurry, comprising a conductive agent, an aqueous medium and the core-shell structured polymer of any one of claims 1 to 11 or the emulsion of claim 28.

30. The conductive slurry of claim 29, wherein the mass fraction of the conductive agent is 10.0% to 15.0% based on the total mass of the conductive slurry.

31. The conductive slurry of claim 29 or 30, wherein the mass fraction of the core-shell structured polymer is 0.5% to 2.5% based on the total mass of the conductive slurry.

32. The conductive slurry of any one of claims 29 to 31, wherein the conductive slurry has a solid content of 12% to 17% and a viscosity of 500 mPa·s to 1500 mPa·s.

33. A negative electrode plate, comprising a negative electrode current collector and a negative electrode film layer provided on at least one surface of the negative electrode current collector, wherein the negative electrode film layer comprises a ne gative electrode active material, a conductive agent and a binder, and the conductive agent is a deposit of the conductive slurry of any one of claims 29 to 32.

34. The negative electrode plate of claim 33, wherein the adhesion force per unit length between the negative electrode film layer and the negative electrode current collector is not less than 12 N/m.

35. A secondary battery, comprising a positive electrode plate, a separator, an electrolyte solution, and the negative electrode plate of claim 33 to 34.

36. The secondary battery of claim 35, wherein the secondary battery comprises at least one of a lithium ion battery, a sodium ion battery, a magnesium ion battery, and a potassium ion battery.

37. A battery module, comprising the secondary battery of claim 35 or 36.

38. A battery pack, comprising at least one of the secondary battery of claim 35 or 36 and the battery module of claim 37.

39. An electrical apparatus, comprising at least one of the secondary battery of claim 35 or 36, the battery module of claim 37 or the battery pack of claim 38.
